# EUROPEAN PATENT SPECIFICATION

(11) **EP 1 531 289 B1**
(45) Date of publication and mention of the grant of the patent: **19.04.2006**
(21) Application number: 03425729.5
(22) Date of filing: 12.11.2003
(51) Int. Cl.: F16H 55/06, B29D 15/00

(54) **Sprocket wheel particularly for driving gripper belts in textile looms**
Antriebszahnrad insbesondere für den Antrieb von Greiferbändern in Webmaschinen
Roue à dents, en particulier pour l'entraînement des bandes à griffes des métiers à tisser

(43) Date of publication of application: 18.05.2005
(73) Proprietor: LAMIFLEX S.p.A., 24028 Ponte Nossa (Bergamo) (IT)
(72) Inventor: Carrara Castelli, Federico, (Prov. of Bergamo) (IT)
(74) Representative: Modiano, Micaela Nadia

(56) References cited:
- EP-A- 0 874 074
- EP-A- 1 035 243
- GB-A- 272 551
- MC-A- 350
- US-A- 2 516 365

## Description

The present invention relates to a sprocket wheel particularly for driving gripper belts in textile looms.

As is known, in order to move gripper belts in textile looms, sprocket wheels are currently used which, as shown for example in EP 0874074, which shows all features of the preamble of claim 1, are constituted by a core that has a flattened disk-like shape and is made of expanded foamed material. The core is retained inside a pair of skins made of carbon fiber, which peripherally support a metallic annular set of teeth that is connected by means of a synthetic resin that acts as a bonding agent.

These sprocket wheels are driven by using a metallic central hub connected to the driving shaft that imparts a reciprocating motion. The motion is transferred from the sprocket wheel to the gripper belt, which is provided with holes, by means of the set of teeth provided on the outside diameter.

Since the speeds involved are very high, the mechanical stresses are considerable despite the low weight of the components, and therefore a considerable load concentrates in the central region of the sprocket wheel and is then distributed in a radial direction along the entire surface of the sprocket wheel.

The core made of foamed material has the advantage of being particularly lightweight and therefore of significantly reducing the inertias involved, but it has limited mechanical strength and very low rigidity, therefore causing, in many cases, problems due to the torsional stress that is imparted by the shaft and due to the fact that, in order to achieve adequate fixing to the hub, a compression may be caused that can damage the part made of foamed material.

This fact limits considerably the possibilities to use the sprocket wheel, since excessive stresses might lead to irreparable damage to such sprocket wheel.

The aim of the invention is to overcome the problems noted above by providing a sprocket wheel, particularly for driving gripper belts in textile looms, which despite being considerably lightweight is capable of having adequate mechanical rigidity and of withstanding in an optimum manner torque and compression stresses.

Within this aim, an object of the invention is to provide a sprocket wheel that allows optimum transmission of forces between the hub and the annular set of teeth without thereby running the risk of damaging the sprocket wheel.

Another object of the present invention is to provide a sprocket wheel that thanks to its particular constructive characteristics is capable of giving the greatest assurances of reliability and safety in use.

Another object of the present invention is to provide a sprocket wheel that can be easily obtained starting from commonly commercially available elements and materials and is also competitive from a merely economic standpoint.

This aim and these and other objects that will become better apparent hereinafter are achieved by a sprocket wheel particularly for driving gripper belts in textile looms, according to the invention, comprising an annular element made of expanded foamed material that is arranged between two disk-like elements made of carbon fiber that support peripherally a metallic annular set of teeth that is connected to said disk-like elements by means of a bonding agent made of synthetic resin, characterized in that it comprises an annular stiffening insert that is arranged centrally in said annular element and is monolithically associated with said disk-like elements.

Further characteristics and advantages will become better apparent from the description of a preferred but not exclusive embodiment of a sprocket wheel, particularly for driving gripper belts in textile looms, illustrated by way of non-limiting example in the accompanying drawings, wherein:

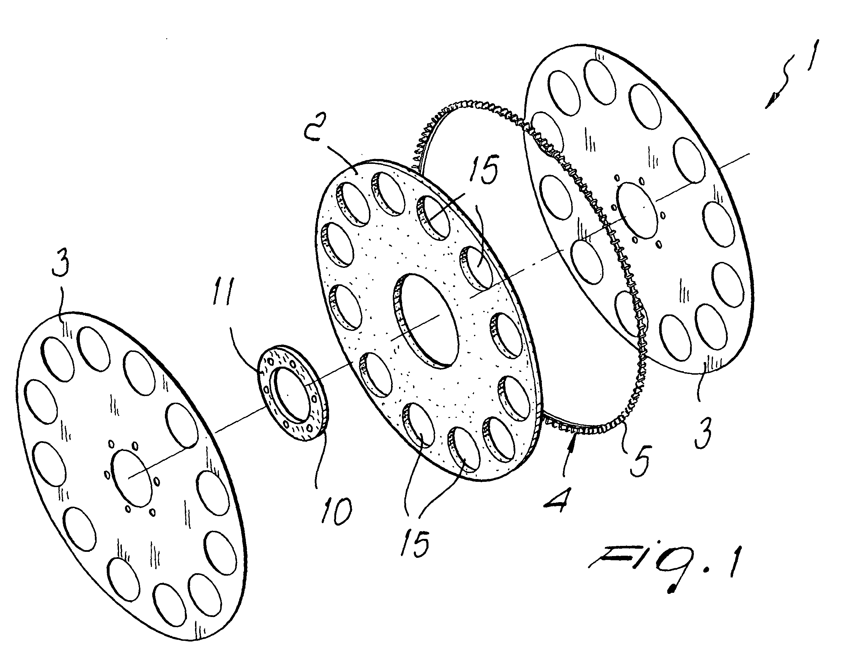

Figure 1 is a schematic exploded perspective view of the sprocket wheel according to the invention;

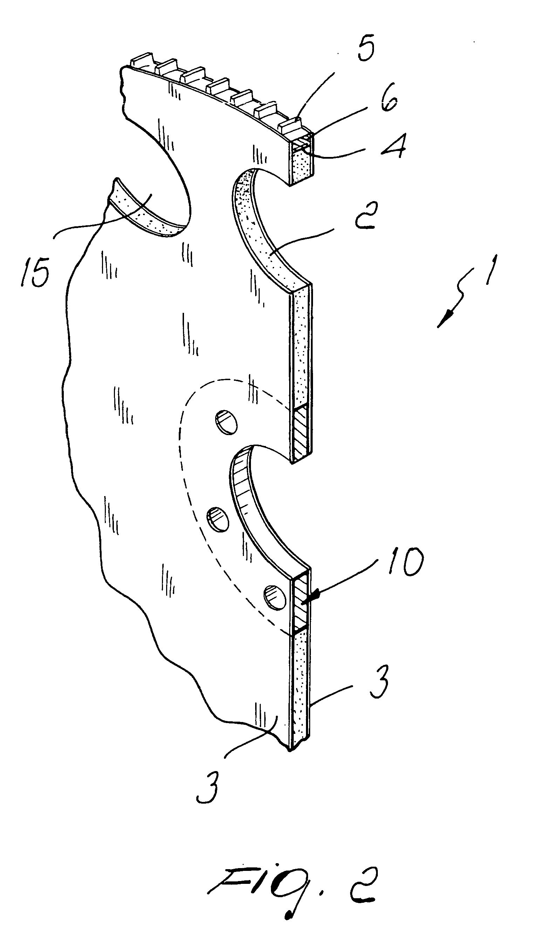

Figure 2 is a partially sectional view of the sprocket wheel.

With reference to the figures, the sprocket wheel particularly for driving gripper belts in textile looms according to the invention, generally designated by the reference numeral 1, comprises an annular element 2, which is made of expanded foamed material and is designed to optimize low weight.

The annular element 2 constitutes a core that is arranged between two disk-like elements or skins 3 that are advantageously provided by means of a carbon fiber fabric, so that the expanded material, upon mating, in practice acts as a spacer in order to ensure adequate flexural rigidity.

At the peripheral region of the disk-like elements there is provided a metallic annular set of teeth, designated by the reference numeral 4, which in practice is embedded in a synthetic resin 6 that acts as a bonding agent for connection to the two disk-like elements.

The annular set of teeth protrudes so as to be provided peripherally with a series of metallic teeth 5 that are capable of mating with the perforations of the gripper belts in order to drive them.

The particular feature of the invention consists in that at the region for connection to the hub there is provided an annular stiffening insert 10, which is arranged centrally in the annular element and is designed to constitute a mechanically rigid element for connection to the hub for driving said sprocket wheel.

Said insert 10 is advantageously made of phenolic paper or other rigid material and is provided peripherally with rough regions 11, obtained for example by sanding, in order to facilitate and optimize adhesion with the sheet-like elements, so as to ensure optimum transfer of load from the skins to the annular set of teeth through the resin that acts as a bonding agent.

With the described arrangement, therefore, in the regions where the stress is concentrated there is provided a rigid material, which is constituted by phenolic paper, metal or other suitable materials and allows to achieve an optimum compromise between the mechanical strength that is required and the lowest possible weight.

Studies that have been conducted show that it is ideal to provide the stiffening insert 10 with an outside diameter comprised from 25 to 30% of the outside diameter of the sprocket wheel.

On the surface of the sprocket wheel lightening holes are provided, designated by the reference numeral 15, which are advantageously obtained by milling in order to prevent any damage to the composite determined by the compression of the expanded foamed material that would instead occur if the holes were produced by punching as in the background art.

From what has been described above, it is therefore evident that the invention achieves the intended aim and objects, and in particular the fact is stressed that adoption of a stiffening insert advantageously provided with through holes for coupling to the driving hub allows to optimize the discharge of stresses, achieving optimum resistance to torsion and to compression, and in practice allows to transmit the stresses between the hub and the sprocket wheel, using in practice only the disk-like elements made of carbon fiber or other suitable fibers and using the annular element merely as a spacer, which is not affected appreciably by transmission of the stresses.

The invention thus conceived is susceptible of numerous modifications and variations, all of which are within the scope of the inventive concept.

All the details may further be replaced with other technically equivalent elements.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A sprocket wheel (1) particularly for driving gripper belts in textile looms, comprising an annular element (2) made of expanded foamed material that is arranged between two disk-like elements (3) made of carbon fiber that support peripherally a metallic annular set of teeth (4) that is connected to said disk-like elements (3) by means of a bonding agent made of synthetic resin, **characterized in that** it comprises an annular stiffening insert (10) that is arranged centrally in said annular element (2) and is monolithically associated with said disk-like elements (3), said insert (10) being coupleable to a central hub connected to the driving shaft that imparts motion.

2. The sprocket wheel (1) according to the preceding claim, **characterized in that** said disk-like elements (3) are made of carbon fiber fabric.

3. The sprocket wheel (1) according to the preceding claims, **characterized in that** said stiffening annular insert (10) is provided with rough regions (11) on its faces.

4. The sprocket wheel (1) according to one or more of the preceding claims, **characterized in that** said rough regions (11) are obtained by sanding.

5. The sprocket wheel (1) according to one or more of the preceding claims, **characterized in that** said annular stiffening insert (10) is made of phenolic paper.

6. The sprocket wheel (1) according to one or more of the preceding claims, **characterized in that** said annular stiffening insert (10) has an outside diameter that is comprised from 25 to 30% of the outside diameter of said sprocket wheel (1).

7. The sprocket wheel (1) according to one or more of the preceding claims, **characterized in that** it comprises lightening holes (15) that affect said disk-like elements (3) and said annular element (2) made of expanded foamed material and are obtained by milling.

## Patentansprüche

1. Ein Antriebszahnrad (1) insbesondere für den Antrieb von Greiferbändern in Webmaschinen, das ein ringförmiges Element (2) aus expandiertem Schaummaterial umfasst, welches zwischen zwei scheibenähnlichen Elementen (3) aus Kohlenstofffaser angeordnet ist, die am Rand einen metallischen ringförmigen Satz von Zähnen (4) halten, der durch ein Haftmittel aus synthetischem Harz mit den scheibenähnlichen Elementen (3) verbunden ist, **dadurch gekennzeichnet, dass** es einen ringförmigen versteifenden Einsatz (10) umfasst, der zentral im ringförmigen Element (2) angeordnet und monolithisch mit den scheibenähnlichen Elementen (3) verknüpft ist, wobei der Einsatz (10) mit einer zentralen Nabe verbunden werden kann, die mit der Antriebswelle verbunden ist, welche Bewegung beaufschlagt.

2. Das Antriebszahnrad (1) gemäß dem obigen Anspruch, **dadurch gekennzeichnet, dass** die scheibenähnlichen Elemente (3) aus Kohlenstofffasergewebe ausgebildet sind.

3. Das Antriebszahnrad (1) gemäß den obigen Ansprüchen, **dadurch gekennzeichnet, dass** der versteifende ringförmige Einsatz (10) mit rauen Bereichen (11) an seinen Flächen ausgestattet ist.

4. Das Antriebszahnrad (1) gemäß einem oder mehreren der obigen Ansprüche, **dadurch gekennzeichnet, dass** die rauen Bereiche (11) durch Schleifen erzeugt werden.

5. Das Antriebszahnrad (1) gemäß einem oder mehreren der obigen Ansprüche, **dadurch gekennzeichnet, dass** der ringförmige versteifende Einsatz (10) aus Phenol-Papier besteht.

6. Das Antriebszahnrad (1) gemäß einem oder mehreren der obigen Ansprüche, **dadurch gekennzeichnet, dass** der ringförmige versteifende Einsatz (10) einen Außendurchmesser hat, der von 25 bis 30 % des Außendurchmessers des Antriebszahnrads (1) beträgt.

7. Das Antriebszahnrad (1) gemäß einem oder mehreren der obigen Ansprüche, **dadurch gekennzeichnet, dass** es Löcher (15) zur Gewichtsverringerung umfasst, die sich in den scheibenählichen Elementen (3) und im ringförmigen Element (2) aus expandiertem Schaummaterial befinden und durch Fräsen erzeugt werden.

## Revendications

1. Roue à dents (1) en particulier pour l'entraînement de courroies à griffes dans des métiers à tisser, comprenant un élément annulaire (2) réalisé en mousse expansée qui est agencé entre deux éléments en forme de disque (3) réalisés en fibre de carbone qui supportent de façon périphérique un jeu de dents annulaire métallique (4) qui est relié aux dits éléments en forme de disque (3) au moyen d'un agent de liaison réalisé en résine synthétique, **caractérisée en ce qu'**elle comprend une rondelle de renforcement (10) qui est agencée de façon centrale dans ledit élément annulaire (2) et qui est associée de façon monolithique aux dits éléments en forme de disque (3), ladite rondelle (10) pouvant être couplée à un moyeu central relié à l'arbre d'entraînement qui communique le mouvement.

2. Roue à dents (1) selon la revendication précédente, **caractérisée en ce que** lesdits éléments en forme de disque (3) sont réalisés en tissu de fibre de carbone.

3. Roue à dents (1) selon les revendications précédentes, **caractérisée en ce que** ladite rondelle de renforcement (10) présente des zones rugueuses (11) sur ses faces.

4. Roue à dents (1) selon une ou plusieurs des revendications précédentes, **caractérisée en ce que** les zones rugueuses (11) sont obtenues par sablage.

5. Roue à dents (1) selon une ou plusieurs des revendications précédentes, **caractérisée en ce que** ladite rondelle de renforcement (10) est réalisée en papier phénolique.

6. Roue à dents (1) selon une ou plusieurs des revendications précédentes, **caractérisée en ce que** ladite rondelle de renforcement (10) présente un diamètre externe compris entre 25 et 30 % du diamètre externe de ladite roues à dents (1).

7. Roue à dents (1) selon une ou plusieurs des revendications précédentes, **caractérisée en ce qu'**elle comprend des trous d'allègement (15) qui sont présents sur lesdits éléments en forme de disque (3) et sur ledit élément annulaire (2) réalisé en mousse expansée et qui sont obtenus par fraisage.
